**Europäisches Patentamt**

**European Patent Office**

**Office européen des brevets**

(11) Veröffentlichungsnummer: **0 098 437 B1**

# EUROPÄISCHE PATENTSCHRIFT

(45) Veröffentlichungstag der Patentschrift:
05.08.87

(21) Anmeldenummer: 83105968.8

(22) Anmeldetag: 18.06.83

(51) Int. Cl.⁴: **E 05 B 49/00,** G 07 F 7/08

(54) **Elektronische Schliesseinrichtung mit über elektrische Impulse miteinander in Wechselwirkung tretenden, schlüsselartigen und schlossartigen Teilen.**

(30) Priorität: 09.07.82 DE 3225754

(43) Veröffentlichungstag der Anmeldung:
18.01.84 Patentblatt 84/3

(45) Bekanntmachung des Hinweises auf die Patenterteilung:
05.08.87 Patentblatt 87/32

(84) Benannte Vertragsstaaten:
DE FR GB IT

(56) Entgegenhaltungen:
EP - A - 0 028 965
EP - A - 0 029 894
DE - A - 2 614 507
US - A - 3 859 634
US - A - 3 944 976

(73) Patentinhaber: Hülsbeck & Fürst GmbH. & Co. KG,
Steeger Strasse 17, D-5620 Velbert 1 (DE)

(72) Erfinder: Stellberger, Karl-Heinz,
Jacob-Lüneschloss-Strasse 8, D-5620 Velbert 15 (DE)

(74) Vertreter: Mentzel, Norbert, Dipl.-Phys. et al,
Patentanwälte Dipl.-Phys. Buse Dipl.-Phys. Mentzel
Dipl.-Ing. Ludewig Unterdörnen 114,
D-5600 Wuppertal 2 (DE)

ACTORUM AG

## Beschreibung

Die Erfindung richtet sich auf eine Schliesseinrichtung der im Oberbegriff des Anspruches 1 angegebenen Art.

Bei der bekannten Schliesseinrichtung (US-A 3 944 976) besitzen Schloss- und Schlüsselteil Schieberegister, von denen eines eine Folge von Zufallszahlen generiert, die dem anderen Teil übertragen und dort gespeichert werden sowie als Schlüsselkombination genutzt werden. Trotz der Verwendung von Zusatzzahlen ist eine Manipulation der Schliesseinrichtung durch Unbefugte möglich, denn die dem Vergleich unterzogenen Impulse werden zwischen dem Schlüssel- und Schlossteil übertragen.

Bei einer anderen Schliesseinrichtung (DE-A 2 234 815) befindet sich der Startschalter am Schlossteil, nach dessen Betätigung ein Oszillator mit einem Zählwerk alle möglichen Permutationen eines Zahlensystems durchspielt und den gesamten «Zahlenkörper» in Form elektrischer Impulse an ein ROM sowohl im Schlossteil als auch im damit kontaktierten Schlüsselteil weitergibt. Diese Impulsfolge bestimmt die Eingangsgrössen für die beiden ROMs. Unter diesen Adressen hat jeder ROM in eindeutiger Weise eine Ausgangsgrösse gespeichert, die er an einen von zwei Eingängen eines Vergleichers wieder in Form elektrischer Impulse abgibt. Vom Vergleicher werden die schlüssel- und schlossseitig anfallenden Ausgangsgrössen auf Übereinstimmung geprüft und ein daran angeschlossenes elektromechanisches Gerät nur dann umgesteuert, wenn die beiden geprüften Ausgangsgrössen übereinstimmen. Der besondere Speicherinhalt der beiden ROMs ist die Codierung des zusammengehörigen Schlüssel- und Schlossteils in elektronischer Form, durch welche dieser Schlüssel- und Schlossteil gegenüber allen übrigen individualisiert ist und sich denen gegenüber unterscheidet. Die Ausgangsgrössen dieser ROMs ist wiederum eine eindeutige Zahl dieses «Zahlenkörpers».

Nachteilig ist bei dieser bekannten Schliesseinrichtung die verhältnismässig leichte Kopierbarkeit des Schlüsselteils. Eine unbefugte Person kann durch Betätigen des Startschalters am Schlossteil die ganze Impulsfolge aufnehmen und, wenn sie kurzzeitig in den Besitz des zugehörigen Schlüsselteils kommt, ebenfalls aufzeichnen, welche Folge von Ausgangsgrössen der Schlüsselteil darauf abgibt. Der elektronische Code ist damit «geknackt». Die unbefugte Person kann danach einen Nachschlüssel leicht herstellen. Durch Verwendung eines sehr grossen «Zahlenkörpers» für die Eingangs- und Ausgangsgrössen lässt sich die Aufbruchsicherheit dieser bekannten Schliesseinrichtung nicht nennenswert erhöhen und man bekommt dabei den Nachteil eines grossen Zeitaufwands für die Übermittlung langer Impulsfolgen.

Der Erfindung liegt die Aufgabe zugrunde, eine elektronische Schliesseinrichtung mit hoher Aufbruchsicherheit der im Oberbegriff des Anspruches 1 angegebenen Art zu entwickeln, bei welcher der Schlüsselteil schwer zu kopieren ist und die auch dann weiter funktionsfähig bleibt, wenn die elektrische Energiequelle ausfallen sollte. Dies wird erfindungsgemäss durch die im Kennzeichen des Anspruches 1 angeführten Massnahmen erreicht, denen folgende besondere Bedeutung zukommt.

Wegen der zweistufigen Codierung erhält man einerseits eine hohe Aufbruchsicherheit und andererseits eine grosse Variationsvielfalt zur Herstellung voneinander klar unterscheidbarer Schlüssel- und Schlossteile, obwohl bei der Erfindung dann nur eine verhältnismässig kleine Menge von Signalen übertragen zu werden braucht, was sehr schnell ausführbar ist. So kommt man zunächst mit wenigen Zufallszahlen aus, auch wenn diese aus einem sehr umfangreichen «Zahlenkörper» entnommen werden. Bei jeder Benutzung ergeben sich andere Zufallszahlen, so dass auch nach sehr langer Beobachtung nicht alle Möglichkeiten durchgespielt sind. Wegen der Zweistufigkeit der erfindungsgemässen Codierung lassen die zwischen dem Schlüssel- und Schlossteil ausgetauschten Impulse auch keine Rückschlüsse auf den tatsächlich benutzten Code zu. Dabei kann der in der ersten Stufe verwendete Algorithmus sehr einfach sein und mit einfachen baulichen Mitteln ein eindeutiges Rechen-Resultat erreicht werden, das allerdings von wechselnden Zufallszahlen ausgeht. Dieses Rechen-Resultat wird aber nicht überspielt, sondern nur ein Bruchstück davon, welches in der zweiten Stufe nach einer bestimmten Regel aus dem Rechen-Resultat sich ergibt. Diese Regel kann z.B. darin bestehen, dass nur eine ganz bestimmte Stelle der Zahl im Rechen-Resultat zur Übertragung verwendet wird, z.B. nur die zweite, fünfte und siebente Stelle einer Zahl, wobei auch die Reihenfolge der Übermittlung dieser Stellen nach einer zwar bestimmten, aber willkürlichen Regel vertauscht sein kann. Eine Dechiffrierung der überführten Signale wird bei der Erfindung nicht ausgeführt, weil sowohl der Schlüssel- als auch der Schlossteil voneinander getrennt aber mit der gleichen zweistufigen Codierung arbeiten. Verglichen werden die in den beiden Teilen erlangten Resultat-Bruchstücke. Fällt eine Energiequelle im Schlüssel- oder Schlossteil aus, so ist die zweistufige Codierung nach der Erfindung davon nicht betroffen. Ein Zurückstellen der Programme im Schlüssel- oder Schlossteil ist nicht erforderlich. Durch Änderung des Algorithmus und der Regel für die Bestimmung der Bruchstücke lässt sich eine grosse Vielzahl unterschiedlicher Schlüssel-Schloss-Paare entwickeln.

Der Vergleich zwischen den empfangenen Daten einerseits und den im Schlüssel- bzw. Schlossteil errechneten Daten andererseits kann in mehreren aufeinanderfolgenden Arbeitszyklen ausgeführt werden, von denen jeder Arbeitszyklus die beschriebene zweistufige Arbeitsweise beinhaltet. Zwischen dem Schlüssel- und Schlossteil ergibt sich dadurch ein über mehrere Arbeitszyklen sich erstreckender Dialog, der jeweils einen erfolgreichen Vergleich in jedem Arbeitszyklus erfordert, um schliesslich nach dem letzten Arbeitszyklus darüber zu entscheiden, ob die Sperrmittel im Schlossteil aus ihrer wirksamen Position in eine unwirksame überführt werden. Durch dieses Dialogsystem ergibt sich eine entsprechend vervielfachte Aufbruchsicherheit bei geringem Bauaufwand der Teile. Es ist dadurch eine besonders raumsparende Gestaltung des Schloss- und Schlüsselteils möglich.

Die Massnahmen des Anspruches 2 bieten die Möglichkeit einer weiteren Verschlüsselung durch das Bildungsgesetz, mit dem die anfänglich einander übermittelten Zufallszahlen im Schlüssel- und Schlossteil miteinander zu Rechengrössen verknüpft werden, die dann Ausgangspunkt für die beschriebene zweistufige Codierung nach der Erfindung sind. Die Entschlüsselung wird weiter erschwert, durch die unabhängige Generierung von Zufallszahlen sowohl im Schlüssel- als auch im Schlossteil. Die Arbeitsweise in einem solchen über mehrere Arbeitszyklen sich erstreckenden Vergleich eines erfindungsgemässen Schlüssel- und Schlossteils wird vorteilhaft in der in Anspruch 3 genannten Weise ausgeführt. Dabei kann der Ablauf im Schlüssel- und Schlossteil spiegelbildlich gemäss Anspruch 4 gestaltet sein.

Sofern man die Massnahme des Anspruches 5 verwendet, ist die Aufbruchsicherheit noch weiter erhöht, was insbesondere für die Arbeitsweise in einem Dialogsystem zwischen dem Schlüssel- und Schlossteil gilt. Eine weitere Steigerung der Aufbruchsicherheit der erfindungsgemässen Schliesseinrichtung ergibt sich schliesslich, wenn man, gemäss Anspruch 6, bei fehlender Übereinstimmung der beidseitigen Resultate die Schliesseinrichtung wenigstens zeitweise unwirksam setzt. Manipulationen am Schloss durch Unbefugte setzen dadurch das Schloss unwirksam.

Die Kommunikation zwischen Schlüssel- und Schlossteil kann entweder über ein Medium, gemäss Anspruch 7, oder unmittelbar durch Berührungskontakt, gemäss Anspruch 8 ausgeführt sein.

Das erfindungsgemässe Schliesssystem eignet sich schliesslich auch bei Anlagen mit hierarchisch einander über- und untergeordneten Schlüssel- bzw. Schlossteilen. Für diese hierarchische Struktur bieten sich die einfachen Möglichkeiten nach Anspruch 9 oder 10.

In den Zeichnungen und Tabellen ist die Erfindung in zwei Ausführungsbeispielen dargestellt. Es zeigen:

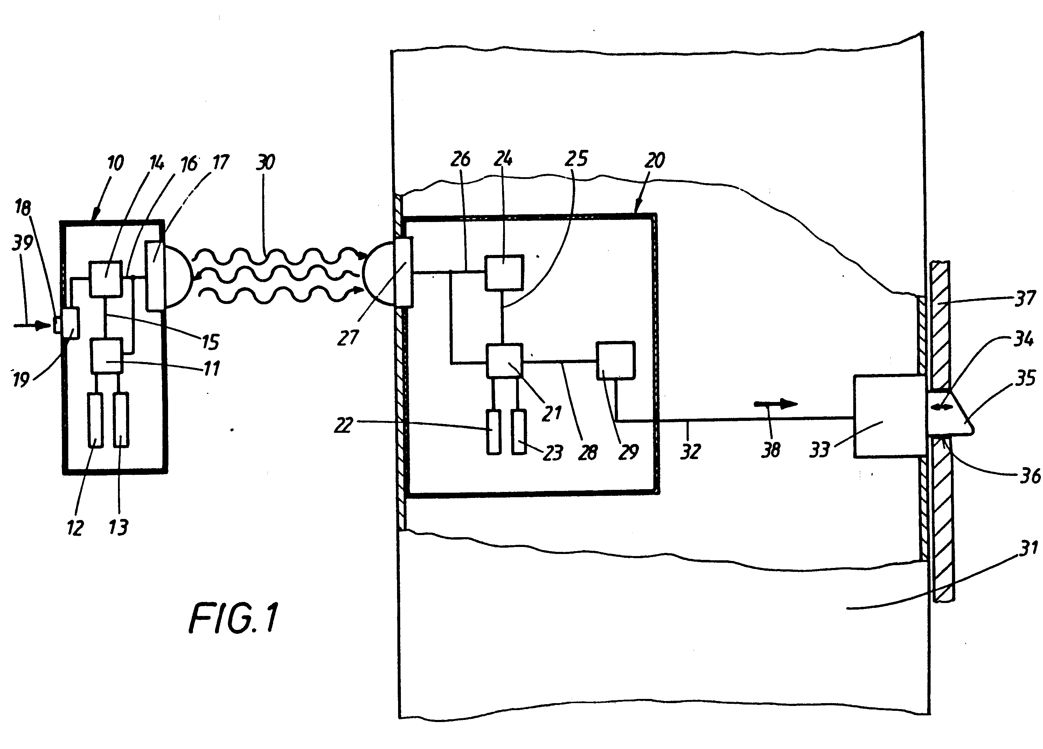

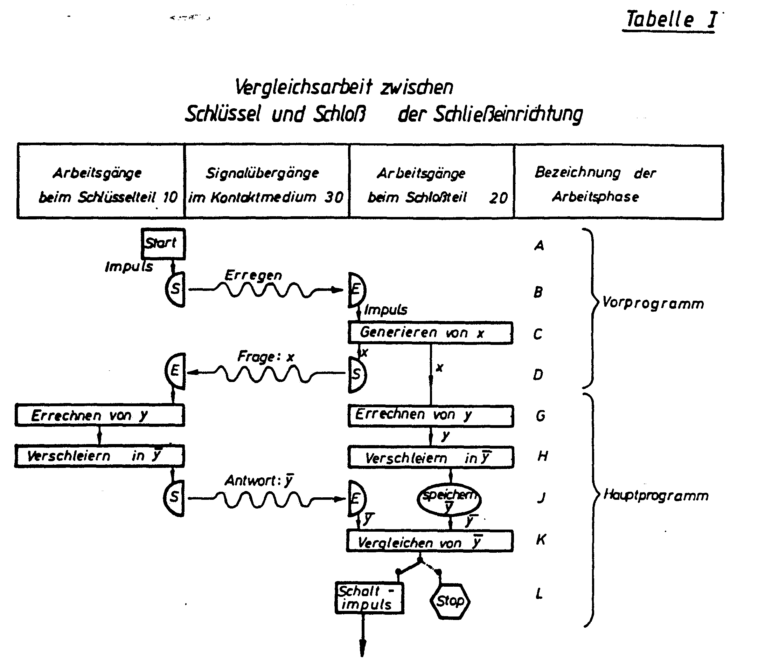

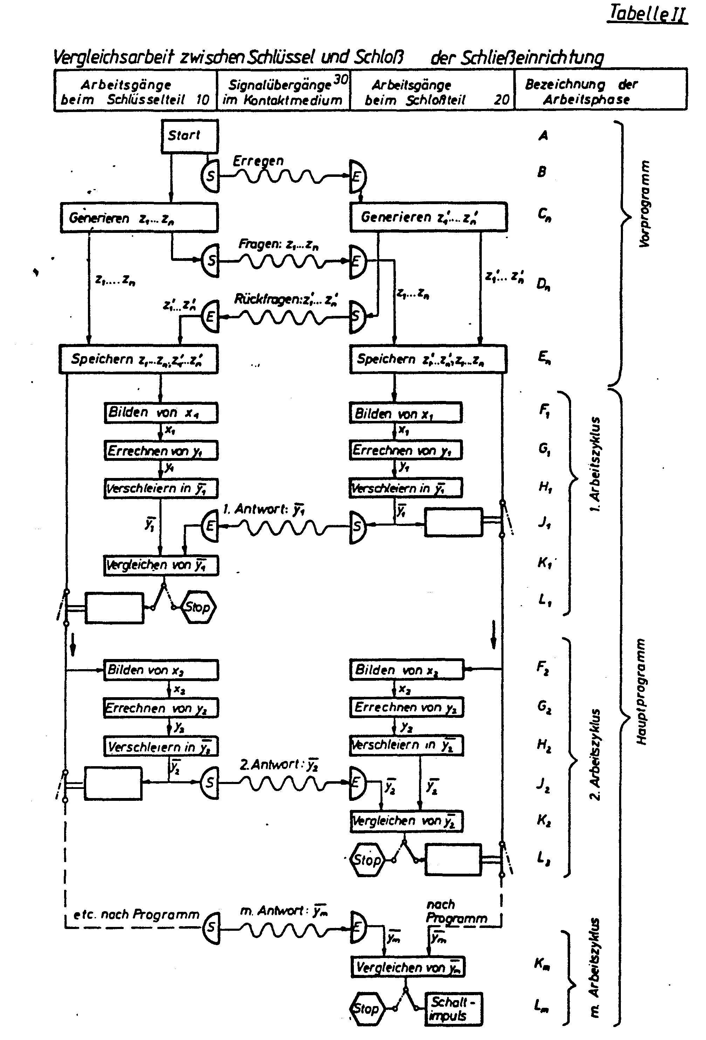

Fig. 1 in schematischer Darstellung und aufgebrochen gezeichnet, die zum erfindungsgemässen Schliesssystem gehörenden beiden schlüsselartigen und schlossartigen Teile,

Tabelle I das Vergleichsprogramm einer ersten Schliesseinrichtung und

Tabelle II das Vergleichsprogramm einer weiteren, abgewandelt ausgebildeten Schliesseinrichtung.

Die Schliesseinrichtung besteht aus einem schlüsselartigen Teil 10 und einem schlossartigen Teil 20, die nachfolgend abgekürzt Schlüssel und Schloss benannt werden sollen. Beide Teile 10, 20 beinhalten elektronische Mikroprozessoren, die man gliedern kann, in einen Mikroprozessor 11, 21 an die ein fester Speicher 12, 22 und ein zur Aufnahme von Zwischenergebnissen dienender flüchtiger Speicher 13, 23 angeschlossen sind. Die Stromversorgung dieser Bauteile ist nicht näher gezeigt und kann über eine elektrische Batterie od. dgl. erfolgen. Als Besonderheit beinhalten Schlüssel 10 und Schloss 20 je einen Zufallszahlengenerator 14, 24, der über die Leitung 15 bzw. 25 einerseits mit dem zugehörigen Mikroprozessor 11, 21 und über die Leitung 16, 26 je an ein Kommunikationsglied 17, 27 andererseits angeschlossen ist. Die Kommunikationsglieder 17, 27 könnten zwar durch Kontaktberührung miteinander in Wechselwirkung treten, doch sind sie im dargestellten Ausführungsbeispiel bereits in einer Abstandslage zueinander wirksam, weil sie als Strahlungsempfänger und Strahlungssender ausgebildet sind, z.B. zur Übertragung von elektromagnetischer Strahlung, insbesondere Infrarotstrahlung. Denkbar wäre es, auch andere Strahlungsarten, z.B. Ultraschall, zur Signalübertragung zu verwenden. Durch die Kommunikationsglieder 17, 27 sind Schlüssel 10 und Schloss 20 in der Lage, in Form einer Frage und einer Antwort Informationen auszutauschen, mit denen das Schloss 20 feststellen kann, dass der ihm zugeordnete, ordnungsgemässe Schlüssel 10 vorliegt. Aus Sicherheitsgründen kann auch eine Überprüfung seitens des Schlüssels erfolgen, ob das ordnungsgemässe Schloss 20 ihm vorliegt. Diese Überprüfungen können mehrfach erfolgen, wodurch eine hohe Sicherheit erzielt wird. Die verschiedenen Signalübergänge 30 im Kontaktmedium zwischen den Kommunikationsgliedern 17, 27 sind in Fig. 1 und in den nachfolgend noch näher zu beschreibenden Tabellen I, II durch Wellen 30 angedeutet.

Das Schloss 20 ist fest in einem abzuschliessenden Element, z.B. einer Fahrzeugtür 31, eingebaut. Der Schlüssel 10 hat ein bequemes Hosentaschenformat und kann von einer Bedienungsperson mitgenommen werden. Zur Auslösung einer Wechselwirkung zwischen Schlüssel und Schloss ist der Schlüssel 10 mit einem von einer Handhabe 18 betätigbaren Ausgelöseglied 19 versehen, welches mit dem Zufallszahlengenerator 14 bzw. dem Mikroprozessor 11 verbunden ist. Liegt die noch näher zu beschreibende Übereinstimmung zwischen Schlüssel und Schloss 10, 20 vor, so gibt der schlossseitige Mikroprozessor 21 über die Leitung 28 ein Signal an ein Schaltglied 29, welches über eine Verbindungsleitung 32 mit einem Stellwerk 33 in Wirkverbindung steht, das auf einen im Sinne des eingezeichneten Pfeiles 34 ein- und ausverschieblichen Riegel 35 einwirkt. In der gezeigten Ausschublage von Fig. 1 greift der Riegel 35 sperrwirksam in die Öffnung 36 eines am feststehenden Rahmen der Tür befindlichen Schliessblechs 37 ein. Die Tür 31 befindet sich in der Sperrlage.

Durch Einwirken des ordnungsgemässen Schlüssel 10 gibt das Schaltglied 29 einen Schaltimpuls gemäss dem angedeuteten Pfeil 38 von Fig. 1 über die Verbindungsleitung 32 an das Stellwerk 33 ab, welches umgesteuert wird und den Riegel 35 in seine Einschublage bringt, wo er aus der Öffnung 36 zurückgezogen ist und das Schliessblech 37 freigibt. Es liegt die Offenstellung des Schlosses 20 vor; die Tür 31 kann aufgeschwenkt werden.

Nach seiner Umsteuerung durch den Schaltimpuls 38 könnte der Riegel 35 selbsttätig durch eine Rückstellfeder od.dgl. wieder in seine Sperrlage von Fig. 1 überführt werden. Es lässt sich natürlich auch ein Stellwerk 33 verwenden, wo für die Umsteuerung des Riegels 35 aus der vorerwähnten Freigabelage in die Sperrlage wieder ein Schaltimpuls 38 erforderlich ist, der durch erneute Wechselwirkung zwischen Schlüssel und Schloss 10, 20 abgegeben wird. Es versteht sich, dass hierzu jedes bekannte Stellwerk 33 mit beliebigem Verschlussorgan anstelle des Riegels 35 verwendet werden könnte, z.B. ein Gabelfallenschloss von Kraftfahrzeugen.

Das Prinzip der Erfindung ist anhand der Tabelle I leicht zu erläutern. Ausweislich der Überschrift sind hier, von oben nach unten gesehen, in zeitlicher Reihenfolge, die Vorgänge eingezeichnet, die, von links nach rechts gesehen, im Schlüssel 10, im Kontaktmedium 30 und im Schloss 20 ablaufen. In der rechten Spalte sind die Bezeichnungen für die einzelnen Arbeitsphasen der in den vorausgehenden Spalten symbolisch angedeuteten Arbeitsvorgänge enthalten und ihre Programmgliederung angedeutet, deren Unterscheidung für die nachfolgend noch näher zu beschreibende Tabelle II vorteilhaft ist. Damit der Vergleich zwischen den beiden Tabellen I, II leichter fällt, sind beim Ausführungsbeispiel der Tabelle I die Arbeitsphasen nicht mit einer fortlaufenden Buchstabenfolge gekennzeichnet.

In Tabelle II treten nämlich noch zwei zusätzliche Vorgänge ein, für welche diese fehlenden Buchstaben reserviert sind. Dies ist für die Systematik der Beschreibung zweckdienlicher.

Nachfolgend wird anhand der Bezeichnungen angegeben, welche Vorgänge in den einzelnen Arbeitsphasen der nach Tabelle I wirksamen Schliesseinrichtung gemäss Fig. 1 ablaufen:

A.) Auslösung:

Durch Drücken des Startknopfes 18 von Fig. 1 im Sinne des angedeuteten Betätigungspfeiles 39 beginnt das im Speicher 12 des Mikroprozessors 11 enthaltene Steuerprogramm selbsttätig abzulaufen.

B.) Start-Kommunikation:

Vom Kommunikationsglied 17 des Schlüssels 10 geht ein Startimpuls aus, wird vom schlossseitigen Kommunikationsglied 27 empfangen und aktiviert den dortigen Mikroprozessor 21, der das in seinem Speicher 22 befindliche Programm seinerseits in Gang setzt.

C.) Generieren:

Der im Schloss befindliche Zufallszahlengenerator 24 erzeugt eine beliebige, aber im Einzelfall bestimmte Zufallszahl als Eingangsgrösse, z.B. x = 438. Ähnliches könnte auch auf Seiten des Schlüssels 10 geschehen, doch soll dies zunächst unberücksichtigt bleiben und insbesondere erst im Zusammenhang mit Tabelle II als weiter Möglichkeit näher beschrieben werden.

D.) Fragen:

Das Kommunikationsglied 27 wirkt jetzt als Sender und übermittelt die Eingangsgrösse x an das schlüsselseitige, nunmehr als Empfänger dienende Kommunikationsglied 17 durch Infrarotstrahlung 30 als Frage. Damit ist das Programm beendet. Jetzt beginnt das eigentliche Hauptprogramm, das eine zweistufige Kodierung umfasst.

G.) Rechen-Phase:

Unabhängig voneinander wird, also schloss- und schlüsselseitig jeweils für sich, ausgehend von der willkürlichen Eingangsgrösse x, anhand einer beidseitig übereinstimmenden Funktionsgleichung $y = f(x)$, die den Algorithmus für die Rechenoperation in dieser ersten Stufe darstellt, eine zugehörige abhängige Veränderliche y errechnet. Diese Funktionsgleichung ist einer erster Kode, der in dieser ersten Stufe zur Individualisierung zusammengehöriger Schlüssel- und Schlossteile gegenüber anderen Schlüssel- und Schlossteilen dient. Handelt es sich beispielsweise im vorliegenden Fall um die Funktionsgleichung $y = \sqrt[4]{x} + 1{,}507$, so erhält man, bei x = 438, als Rechenresultat y = 6,08176.

H.) Verschleierungs-Phase:

Nach einer schlüssel- und schlossseitig übereinstimmenden Regel wird in der nächsten Stufe ein Bruchstück $\bar{y}$ des ermittelten Rechenresultats y entnommen, das nunmehr als Ausgangsgrösse für die weiteren Vorgänge dient. Diese Regel ist so gewählt, dass das vorausgehende Rechenresultat y daraus nicht ableitbar ist und auch keine Rückschlüsse auf die Rechenoperation der vorausgehenden Stufe gemacht werden können. Im vorliegenden Fall soll als Regel gelten, die zweite, dritte, vierte und fünfte Stelle hinter dem Komma der Funktionsgrösse y als Ausgangsgrösse $\bar{y}$ zu verwenden. Dies ergibt im vorliegenden Fall $\bar{y}$ = 8176.

J.) Antworten:

Während die schlossseitig ermittelte Ausgangsgrösse $\bar{y}$ im Speicher 23 kurzzeitig festgehalten wird, wird die schlüsselseitig ermittelte Ausgangsgrösse $\bar{y}$ als Antwort über die beiden Kommunikationsglieder 17 und 27 wieder dem Schloss 20 übermittelt.

K.) Vergleichen:

Im Schloss 20 werden die schlüssel- und schlossseitig erlangten Ausgangsgrössen $\bar{y}$ auf ihre Identität überprüft. Man kann sich hierzu ein Vergleichsglied verwenden, das, in Abhängigkeit davon, ob Übereinstimmung oder Nichtübereinstimmung vorliegt, zwei Ergebnisse liefert, nämlich:

L.) Auswahl-Folge:

Bei Nichtidentität, die in Tabelle I durch die strichpunktierte Stellung eines symbolischen Schaltglieds angedeutet ist, wird das weitere Vergleichsprogramm auf der Schlossseite abgebrochen, und zwar zweckmässigerweise für eine bestimmte Zeitdauer, z.B. für 30 Sekunden. Erst dann setzt sich der Mikroprozessor 21 in seine Ausgangslage zurück. Während dieser Zeitdauer ist das Schloss 20 auf keinerlei schlüsselseitige Impulse ansprechbar. Bedarfsweise könnte das Ausschalten der schlossseitigen Elektronik endgültig sein, so dass weitere Manipulationen am Schloss aufgrund der offensichtlich eingeleiteten Aufbruchsversuche nicht mehr möglich sind; erst besondere fachmännische Massnahmen bringen das Schloss 20 in seinen anfänglichen Zustand wieder zurück, der ihn für schlüsselseitige Impulse überhaupt erst wieder empfänglich macht.

Im Übereinstimmungsfall dagegen, wenn also die beidseitigen Endgrössen $\bar{y}$ identisch sind, wird vom Schaltglied 29 ein Schaltimpuls 38 ausgelöst, der bei einfachen Schliesseinrichtungen bereits unmittelbar zur Umsteuerung des schlossseitigen Riegels 35 dienen kann. Damit ist die Programmfolge der Tabelle I abgeschlossen.

Um eine höhere Aufbruchsicherheit zu erreichen, kann der angefallene Schaltimpuls als Auslöser einer neuen Arbeitsfolge zwischen Schlüssel und Schloss dienen, die in spiegelbildlicher Weise zu der in Tabelle I erwähnten abläuft, was dort nicht näher gezeigt ist.

Über die Kommunikationsglieder 17, 27 kann ein Rückerregen des Schlüssels 10 erfolgen, wo eine weitere Zufallszahl generiert wird, welche in den nachfolgenden Arbeitsphasen die analogen, zu C.) bis L.) entsprechenden Vorgänge vollzieht, die allerdings jetzt in spiegelbildlicher Weise zwischen Schlüssel und Schloss ablaufen. Jetzt würde der Schlüssel 10 der aktive Partner sein, während das Schloss auf dessen Veranlassung passiv mitwirkt. So würde entsprechend C.) der Schlüssel die neu generierten Zufallszahlen als Rückfrage an das Schloss weiterleiten, so dass beidseitig, gemäss G.) und H.) die Rechenoperationen ausgeführt werden und gemäss J.) eine Rückantwort des Schlosses an den Schlüssel gelangt, wo diesmal der Vergleich der beidseitigen Ausgangsgrössen stattfindet. Dann ergibt sich schlüsselseitig entweder ein Stopp der Verfahrensweise wegen Nichtübereinstimmung oder ein schlüsselseitiger Schaltimpuls, der nun seinerseits einen weiteren Arbeitszyklus einleitet, der nun wieder gemäss Tabelle I abläuft. Nach einer Anzahl von Arbeitszyklen ergibt sich schliesslich, wenn erfolgreich alle Übereinstimmungen festgestellt wurden, im Schloss 20 ein endgültiger Schaltimpuls, der die Umsteuerung der Sperrmittel 33, 34 des Schlosses 20 bewirkt.

In Tabelle II ist ein in dieser Weise mehrere Arbeitszyklen umfassendes Programm dargestellt, das sich durch eine besonders hohe Variationsvielfalt in der Gestaltung von Schlüssel und Schloss und hohe Aufbruchsicherheit des Schlosses auszeichnet. Zur Bezeichnung entsprechender Arbeitsphasen sind die gleichen Bezeichnungen wie in Tabelle I verwendet worden, aber zur Herausstellung ihrer Besonderheit mit einem Index versehen. Aus der Tabelle II ergibt sich nunmehr, ergänzend zu den Ausführungen betreffend Tabelle I, die folgende besondere Arbeitsweise:

Die ersten beiden Arbeitsphasen A.) und B.) sind die gleichen wie in Tabelle I, doch ergeben sich bereits folgende Abweichungen im weiteren Vorprogramm:

Cn.) Generieren:

Jetzt werden eine ganze Schar von Zufallszahlen z1 bis zn im schlüsselseitigen Zufallszahlengenerator 14 sowie eine weitere, unabhängige Schar von Zufallszahlen Z1′ bis Zn′ im schlossseitigen Zufallsgenerator 24 erzeugt.

Dn.) Fragen und Rückfragen:

Unter Verwendung der Kommunikationsglieder 17, 27 teilen sich Schlüssel 10 und Schloss 20 gegenseitig die beiderseits generierten Zufallszahlen als Eingangsgrössen mit, was man als Frage des Schlüssels 10 an das Schloss 20 und als Rückfrage des Schlosses 20 an den Schlüssel 10 auffassen kann.

En.) Speichern:

Die beiderseits vorliegenden beiden Scharen von Eingangsgrössen Z1 bis Zn′ werden nun schlüssel- und schlossseitig in den Speichern 13, 23 für das jetzt einsetzende Hauptprogramm gespeichert, wo mehrere Arbeitszyklen ablaufen.

Die bisher zwischen Schlüssel und Schloss 10, 20 übermittelten Fragen und Rückfragen lassen über die individuelle Kodierung des zusammengehörigen Schlüssel-Schloss-Paares nichts erkennen. Eine Dekodierung ist aber auch in den verschiedenen nachfolgenden Arbeitszyklen nicht möglich. In jedem Arbeitszyklus, der mit einheitlichen Indizes bezeichnet ist, fallen, bis auf die erste Arbeitsphase, die gleichen Vorgänge an, wie sie im Zusammenhang mit Tabelle I bereits beschrieben worden sind, und zwar:

F1.) Bilden der ersten Rechengrösse:

Im Schlüssel 10 und im Schloss 20, jeweils für sich, werden aus den zugehörigen Speichern 13, 23 vorzugsweise mehrere Zufallszahlen in beidseitig übereinstimmender Weise entnommen und diese jeweils nach dem gleichen Bildungsgesetz miteinander zu einer ersten Rechengrösse x1 verknüpft. Dieses in den Festspeichern 12 bzw. 13 eingegebene Bildungsgesetz ist ein weiterer Teil des Kodes, welcher ein zusammengehöriges Schlüssel-Schloss-Paar 10, 20 gegenüber allen übrigen, nicht zusammengehörigen individualisiert. Im Falle der Tabelle II ist angenommen, dass ein zusammengehöriges Schlüssel-Schloss-Paar vorliegt, weshalb beidseitig die gleiche Rechengrösse x1 anfällt.

In den nun folgenden Arbeitsgängen G1, H1 fallen, bezogen auf die Rechengrösse x1 die gleichen Vorgänge an, die in den entsprechenden Arbeitsphasen der Tabelle I bereits ausführlich beschrieben worden sind. Dann ergibt sich die

J1.) erste Antwort:

Das Schloss 20 teilt über die Kommunikationsmittel 27, 17 dem Schlüssel 10 seine ermittelte Ausgangsgrösse $\bar{y}1$ mit. Diese Mitteilung kann aber schlossseitig, ohne dass man auf das nachfolgende Vergleichsergebnis warten müsste, bereits dazu ausgenutzt werden, um wie ausweislich der eingezeichneten «Schaltgliedsymbolik» zu ersehen ist, aus dem Speicher schlossseitig bereits eine weitere Gruppe von Zufallszahl für den nächsten Arbeitszyklus zu entnehmen, auf den später einzugehen sein wird.

K1.) Vergleichen:

Dann kommt es, wie bereits in Tabelle II beschrieben wurde, zu einem Vergleichen der beiderseitigen Endgrössen $\bar{y}1$ in der Arbeitsphase K1, die zu den bereits erwähnten Alternativen in der Arbeitsphase

L1.) Auswahl-Folge:

führt, nämlich bei fehlender Übereinstimmung einen Stopp des Arbeitsvorganges auf der Schlüsselseite und im Fall einer Übereinstimmung wird nun auch schlüsselseitig aus dem dortigen Speicher 13 aufgrund der in 12 vorgegebenen Programmsteuerung die gleiche Gruppe von Zufallszahlen wie vorstehend schlossseitig bei J1.) für die weitere Vergleichsarbeit entnommen.

Es schliessen sich nun die für einen vollen Arbeitszyklus benötigten Arbeitsschritte an, wie sie aus Tabelle II zu erkennen und mit dementsprechenden Bezeichnungen F2 bis L2 bezeichnet worden sind. In den einzelnen Arbeitsphasen ergeben sich die im vorausgehenden Arbeitszyklus bereits beschriebenen Vorgänge, die zur Bildung einer entsprechenden Rechengrösse x2 auf beiden Seiten in der Arbeitsphase F2 führen und sich dann in den nachfolgenden Arbeitsphasen G2 und H2 zu den entsprechenden Ausgangsgrössen $\bar{y}2$ entwickeln. Dieser zweite Arbeitszyklus läuft zwar analog aber spiegelbildlich zu den Vorgängen im vorbeschriebenen Arbeitszyklus ab. Während vorausgehend, beim ersten Arbeitszyklus, eine erste Antwort des Schlossteiles 20 an den Schlüssel 10 in der Arbeitsphase J1 erfolgte, gibt es jetzt eine vom Schlüssel 10 an das Schloss 20 gerichtete zweite Antwort in der Arbeitsphase J2 dieses zweiten Arbeitszyklus. Darin ist eine Reaktion auf die vorausgehend in der Vorstufe in der Arbeitsphase Dn sich ergebenden Fragen und Rückfragen zu sehen. Wird nach dem Vergleich in der Arbeitsphase K2 an der Stelle L2 die fehlende Übereinstimmung ermittelt, so kommt es zu einer Unterbrechung des Arbeitsprogrammes. Diese fehlende Übereinstimmung ergibt sich, wenn ein falscher Schlüssel vorliegt, denn es wird keine oder eine falsche erste Rückantwort in der Arbeitsphase J2 übermittelt, auch wenn schlossseitig nach dem bisherigen Programm ordnungsgemäss vorgegangen wurde. Die Wirksamkeit der Schliesseinrichtung kann dadurch für eine gewisse Zeitdauer unterbrochen werden. Das zusammengehörige Schlüssel-Schloss-Paar ist weiterhin gegenüber allen übrigen dadurch individualisiert, dass ausser dem bereits erwähnten übereinstimmenden Bildungsgesetz für die Ausgangsgrössen x1 bzw. x2 auch noch bestimmte Funktionsgleichungen und Verschleierungsregeln in den Arbeitsphasen G1, H1 bzw. G2 und H2 vorliegen. Im allgemeinen wird es genügen, im Verlauf der gesamten Vergleichsarbeit für jeden Arbeitszyklus die gleichen Rechenoperationen zu verwenden, doch könnten zur weiteren Individualisierung dieses Schlüssel-Schloss-Paares in aufeinanderfolgenden Arbeitszyklen jeweils unterschiedliche Bildungsgesetze, Funktionsgleichungen und/oder Verschleierungsregeln vorliegen, auch wenn natürlich innerhalb eines Arbeitszyklus schlüssel- und schlossseitig jeweils der gleiche Algorithmus verwendet wird.

Diese Arbeitszyklen können sich in der geschilderten, spiegelbildlichen Weise abwechseln, wobei nach jedem Arbeitszyklus zwischen Schlüssel und Schloss eine Antwort übermittelt wird, die zu einem Vergleich der beiden Teile herangezogen wird. Dazu verwendet man immer wieder andere Gruppen, aus den in den beidseitigen Speicher 13, 23 enthaltenden Scharen von Zufallszahl z1 bis zn und z1' bis zn'. In Tabelle II ist angedeutet, dass sich insgesamt m Antworten in m Arbeitszyklen ergeben. Sind die Übereinstimmungen lückenlos bis zu dieser Endphase festgestellt worden, endet also auch der Vergleich in der letzten Vergleichs-Phase Km positiv, so fällt bei Lm ein Schaltimpuls an, der auf die Umsteuerung der Stellmittel 33, 35 im Bereich des Schlosses 20 einwirkt. Damit ist die Vergleichsarbeit beendet. Das Schlüssel-Schloss-Paar steht für eine neue Wechselwirkung wieder zur Verfügung, die wieder mit der Vorstufe beginnt.

Die hier angefallenen m Antworten $\bar{y}1$ bis $\bar{y}m$ lassen keinerlei Rückschlüsse zu, durch welche in den Arbeitsphasen F1, G1 und H1 usw. angewendeten Algorithmen das betreffende Schlüssel-Schloss-Paar individualisiert ist. Man weiss nicht einmal auf welche Rechengrösse xm sich die einzelne Antwort $\bar{y}n$ ergeben hat. Durch die Übermittlung sind zwar die Zufallszahlen z1 bis zn' «abzuhören», doch weiss man nicht, auf welche Weise sie innerhalb der elektronischen Bauteile von Schlüssel und Schloss zu den erwähnten Rechengrösse xm vereinigt wurden und welche Gruppen aus dieser Zahlenschar dabei jeweils herangezogen werden. Es fehlt daher jeder Ansatz für eine Dekodierung der das Schlüssel-Schloss-Paar kennzeichnenden Grössen. Der Schlüssel lässt sich nicht kopieren. Auch aus dem Zusammenspiel zwischen Schlüssel und Schloss sind keine Anhaltspunkte zur Dekodierung der Schliesseinrichtung entnehmbar.

In Abwandlung der erfindungsgemässen Schliesseinrichtung wäre es möglich, diese bei Anlagen mit unterschiedliche Funktionen auslösenden Schlüsseln zu verwenden, wie es beispielsweise bei Kraftfahrzeugschlössern mit einem Normalschlüssel und einem Sonderschlüssel bekannt ist. In diesem Fall wäre es möglich, im Anschluss an eine Arbeitsphase H der Tabelle I bzw. II noch eine Maskierung vorzunehmen, die im Fall des Sonderschlüssels beispielsweise alle Informationen der Endgrösse durchlässt, beim Normalschlüssel aber nur bestimmte Stellen. Auf der Schlossseite stehen die gleichen Maskierungen zur Verfügung, weshalb in der schlossseitig nachfolgend ablaufenden Vergleichsphase, analog zu K.) von Tabelle I für die beiden unterschiedlichen Schlüssel zwei Vergleichsmöglichkeiten angeboten werden. Die vom Schlüssel kommende Antwort analog zu K.) von Tabelle I wird zunächst einem ersten Vergleichsglied zugeführt, das im Übereinstimmungsfall mit dem Antwortsignal eines ordnungsgemäss zugeordneten Sonderschlüssels die entsprechenden Schaltimpulse für die Sonderaufgaben im Schloss abgibt, während im Nichtübereinstimmungsfall die Anfrage an ein weiteres Vergleichsglied geht, welches das eingegangene Antwortsignal mit jener Maskierung der schlossseitigen Endgrösse vergleicht, die für den ordnungsgemässen Normalschlüssel vorgesehen ist. Lag schlüsselseitig ein solcher Normalschlüssel vor, so wird Übereinstimmung der zu vergleichenden Signale jetzt festgestellt und daher ein für die Funktionen des Normalschlüssels vorgesehener Schaltimpuls im Schloss ausgelöst, der die dafür vorgesehenen Schaltbewegungen ausführt. Ist aber auch diesmal keine Übereinstimmung festgestellt worden, so kommt es zu dem bereits im Zusammenhang mit Tabelle I bei der Arbeitsphase L.) beschriebenen Stopp des Vergleichsverfahrens für wenigstens eine bestimmte Zeitdauer.

Auf diese Weise können auch mehr als nur zwei Schlüssel durch entsprechend vielfältige Maskierung der Endgrösse in einer Schliessanlage verwenden, die von einem Schloss erkannt und zur Auslösung unterschiedlicher Funktionen im Schloss ausgenutzt werden. Bei Kraftfahrzeugen beispielsweise könnte man verschiedene Schlüssel für das Fahrzeug steuernde, unterschiedliche Personen vorsehen, denen schlossseitig wenigstens teilweise unterschiedliche Funktionen zugeordnet sind. So kann man, in Abhängigkeit von dem benutzten, personenbezogenen Schlüssel, über den entsprechenden Schlüssel unterschiedliche Schaltimpulse im Schloss auslösen, die den Rückspiegel, den Aussenspiegel, die Sitzhöhe, die Sitzposition und/oder die Stellung der Rückenlehne selbsttätig an die individuellen Bedürfnisse dieser Person einstellen. Wird mit dem einer bestimmten Person zugeordneten Schlüssel z. B. das Zündschloss betätigt, so wird gemäss den einprogrammierten Werten vom Schlosteil die Einstellung aller erforderlichen Bauteile an die Bedürfnisse der betreffenden Person ausgeführt. Das Fahrzeug stellt sich selbst personengerecht ein. Durch unterschiedliche Maskierungen ist eine grosse Vielzahl unterschiedlicher Schlüssel bei gleichem Schloss für verschiedene Steuerfunktionen möglich.

Schliesslich ist die erfindungsgemässe Schliesseinrichtung auch bei Anlagen mit hierarchisch einander über- und untergeordneten Schlüsseln und Schlössern möglich, worauf bereits hingewiesen wurde. Im einfachsten Fall verwendet man bei allen Schlüsseln den gleichen Algorithmus, doch wird das Resultat in Abhängigkeit von der hierarchischen Stellung des Schlüssels bzw. des Schlosses maskiert. Je mehr übergeordnet ein Schlüssel ist, umso geringer ist die Maskierung. Der Generalhauptschlüssel wäre dann ganz unmaskiert. Schlossseitig bedeutet dies umgekehrt, dass umso mehr alternative Maskierungen für die Ausgangsgrösse $\bar{y}$ im Anschluss an die Arbeitsphase H.) der Tabelle I erforderlich sind, je untergeordneter das Schloss ist, weil es mit einer bestimmten Anzahl von gleich- und übergeordneten Schlüsseln erfolgreich zusammenwirken muss. In der Vergleichsphase analog zu K.) von Tabelle I werden schlossseitig alle für dieses Schloss vorgesehenen alternativen Maskierungen berücksichtigt, bevor in der Schlussphase L.) entschieden wird, ob alle keine Übereinstimmung liefern und daher der Vergleichsvorgang gestoppt wird, oder ob eine der angebotenen Möglichkeiten die Übereinstimmung mit dem vom Schlüssel kommenden Antwortsignal $\bar{y}$ liefert und daher ein Schaltimpuls zur Umsteuerung der schlossseitigen Sperrmittel erfolgen darf.

In Abweichungen vom vorgenannten Fall wäre es bei einer Schlüssel-Schloss-Hierarchie auch möglich, unterschiedlichen Schlüsseln unterschiedliche Algorithmen zugrundezulegen. In diesem Fall beinhalten die Schlösser dann jeweils die Algorithmen aller zugelassenen Schlüssel und im Betätigungsfall wird schlossseitig überprüft, ob eine Übereinstimmung mit dem Algorithmus des Schlüssels vorliegt oder nicht, worauf sich wieder die beiden Alternativen der Betätigung bzw. Nichtbetätigung der schlossseitigen Sperrmittel ergeben.

**Patentansprüche**

1. Elektronische Schliesseinrichtung mit über elektrische Impulse miteinander in Wechselwirkung tretenden, schlüssel- und schlossartigen Teilen (Schlüsselteil 10, Schlossteil 20), wobei der Schlossteil (20) an einem abzuschliessenden Element, wie einer Tür (31), angeordnet ist, Sperrmittel (33, 35) aufweist, nur von einem bestimmten zugehörigen Schlüsselteil (10) betätigbar ist und dadurch die Sperrmittel (33, 35) zwischen einer wirksamen und einer unwirksamen Stellung umsteuert (34), wobei, auf einen Startimpuls hin, zumindest der eine Teil (Schlossteil 20) in einem Zufallsgenerator (24) willkürlich Zufallszahlen in Form elektrischer Impulse erzeugt und diese einerseits speichert (23) und andererseits dem anderen Teil (Schlüsselteil 10) über ein Kontaktmedium überträgt (30), die schlüssel- und schlossseitig anfallenden Impulse einem gemeinsamen Vergleicher im einen Teil (Schlossteil 20) zugeführt und dort verglichen werden, und der Vergleicher nur im Fall der Übereinstimmung der beiden Impulsfolgen über ein Schaltglied (29) einen Schaltimpuls (38) zur Umsteuerung (34) der Sperrmittel (33, 35) abgibt, dadurch gekennzeichnet, dass der Startimpuls vom Schlüsselteil (10) ausgeht (A),

dass die Zufallszahlen (x; Z1 bis Zn; Z1' bis Zn') im Schlüssel- und Schlossteil (10, 20) jeweils getrennt einer zweistufigen Codierung unterzogen werden, welche für zusammengehörige Schlüssel- und Schlossteile (10, 20) jeweils charakteristisch ist,

wobei in der ersten Stufe (G; G1, G2) ein Rechner (11, 21) in beiden Teilen (10, 20) mit einem vorgegebenen Algorithmus bestimmte Rechenoperationen ausführt, deren Rechen-Resultat (y; y1; y2) von den jeweils benutzten Zufallszahlen (x; x1, x2) abhängt

und in der zweiten Stufe (H; H1, H2) der Rechner (11, 21) in beiden Teilen (10, 20) aus dem Rechenresultat (y; y1, y2) nach einer bestimmten, von den generierten Zufallszahlen unabhängigen Regel jeweils ein Bruchstück (ȳ; ȳ1, ȳ2) entnimmt,

und dass nur diese Resultat-Bruchstücke (ȳ; ȳ1, ȳ2) zwischen dem Schlüssel- und Schlossteil (10, 20) übertragen (30) und dem gemeinsamen Vergleicher (K; K1, K2) zugeführt (J; J1, J2) werden.

2. Schliesseinrichtung nach Anspruch 1, dadurch gekennzeichnet, dass nach dem schlüsselseitigen Startimpuls (A, B) zunächst ein Vorprogramm (Cn bis En) abläuft, wo sowohl im Schlüssel- als auch im Schlossteil (10, 20), jeweils für sich, eine eigene Menge (Z1–Zn; Z1' bis Zn') unabhängiger Zufallszahlen generiert (Cn), einander übermittelt (Dn) und beidseitig jeweils in Speichern (13, 23) aufgenommen (En) werden,

und dann in einem nachfolgenden Hauptprogramm jeweils eine schloss- und schlüsselseitig übereinstimmende Gruppe aus diesen Zufallszahlen den Speichern (13, 23) entnommen (F1; F2) und nach einem gleichen Bildungsgesetz zu Rechengrössen (x1; x2) verknüpft werden

und diese Rechengrössen (x1; x2) den jeweiligen Rechenoperationen (G1; G2) in den Rechnern (11, 21) zugrundegelegt werden.

3. Schliesseinrichtung nach Anspruch 2, dadurch gekennzeichnet,

dass das Hauptprogramm zwischen dem Schlüssel- und Schlossteil (10, 20) mehrere analoge aufeinanderfolgende Arbeitszyklen (F1 bis L1; F2 bis L2) umfasst,

die jeweils aus einer schloss- und schlüsselseitig unabhängig ablaufenden, zweistufigen Ermittlungsphase (F1, G1, H1; F2, G2, H2) für die jeweiligen Resultat-Bruchstücke (ȳ1; ȳ2; ȳm) und einer im Schlüssel- und Schlossteil (10, 20) gemeinsam ablaufenden Vergleichsphase (J1, K1; J2, K2) bestehen,

der am Ende eines Arbeitszyklus (F1 bis L1) anfallende Schaltimpuls (L1, L2) im Falle der Übereinstimmung der zu vergleichenden Resultat-Bruchstücke (ȳ1, ȳ2, ȳm) zwar in der Regel nur die Bildung einer neuen Rechengrösse (x2) aus einer weiteren Gruppe der gespeicherten Zufallszahlen (Z1 bis Zn, Z1' bis Zn') für den jeweils nächsten Arbeitszyklus (F2 bis L2) auslöst,

aber der nach einer bestimmten Anzahl von Arbeitszyklen im letzten Arbeitszyklus (Km, Lm) sich ergebende Schaltimpuls (Lm) die schlossseitigen Sperrmittel (33, 35) umsteuert.

4. Schliesseinrichtung nach Anspruch 3, dadurch gekennzeichnet,

dass die Arbeitszyklen (F1 bis L1; F2 bis L2) abwechselnd, in zueinander spiegelbildlichem Sinn, zwischen dem Schlüssel- und Schlossteil (10, 20) ablaufen, indem

die Vergleichsphase (K1, K2, Km) der beidseitig anfallenden Resultat-Bruchstücke (ȳ1; ȳ2; ȳm) in aufeinanderfolgenden Arbeitszyklen einmal schlüsselseitig (10) und einmal schlossseitig (20) abläuft

und dabei jeweils im anderen Teil (Schloss- bzw. Schlüsselteil 20, 10) bereits beim Übermitteln (30) der Resultat-Bruchstücke (ȳ1; ȳ2; ȳm) die neue Rechengrösse (x2; xm) für den nächsten Arbeitszyklus gebildet wird und dort, unabhängig vom Vergleichsergebnis (K1; K2) der neue Arbeitszyklus beginnt.

5. Schliesseinrichtung nach einem oder mehreren der Ansprüche 2 bis 4, dadurch gekennzeichnet,

dass in jedem Arbeitszyklus (F1 bis L1; F2 bis L2) schlüssel- und schlossseitig zwar stets der gleiche Algorithmus zugrunde liegt, dieser aber zyklenweise übereinstimmend im Schlüssel- und Schlossteil (10, 20) sich verändert.

6. Schliesseinrichtung nach einem oder mehreren der Ansprüche 1 bis 5, dadurch gekennzeichnet,

dass im Falle fehlender Übereinstimmung der beiden Resultat-Bruchstücke (ȳ1; ȳ2; ȳm) in der Vergleichsphase (K1; K2; Km) der Schlüssel- und/oder Schlossteil (10, 20) wenigstens für eine bestimmte Zeitdauer unwirksam ist.

7. Schliesseinrichtung nach einem oder mehreren der Ansprüche 1 bis 6, dadurch gekennzeichnet,

dass die elektrischen Impulse zwischen dem Schlüssel- und Schlossteil (10, 20) durch Strahlung, z.B. elektromagnetische Wellen (30), übertragen werden.

8. Schliesseinrichtung nach einem oder mehreren der Ansprüche 1 bis 6, dadurch gekennzeichnet,

dass die elektrischen Impulse zwischen dem Schlüssel- und Schlossteil (10, 20) durch Berührungskontakt übertragen werden.

9. Schliesseinrichtung nach einem oder mehreren der Ansprüche 1 bis 8, mit zueinander hierarchisch über- und untergeordneten Schlüssel- und Schlossteilen (10, 20), dadurch gekennzeichnet,

dass allen Schlüssel- und Schlossteilen (10, 20) in der ersten Stufe (G; G1, G2) der Codierung bei Ermittlung der Rechen-Resultate (y; y1, y2) zwar der gleiche Algorithmus zugrunde liegt,

aber bei untergeordneten Schlüssel- und Schlossteilen (10, 20) in der zweiten Stufe (H; H1, H2) der Codierung kleinere Bruchstücke (ȳ; ȳ1, ȳ2, ȳm) des Rechen-Resultats ermittelt und/oder übertragen (J; J1, J2) und/oder miteinander verglichen (K; K1, K2, Km) werden als bei übergeordneten Schlüssel- und Schlossteilen (10, 20).

10. Schliesseinrichtung nach einem oder mehreren der Ansprüche 1 bis 8, mit zueinander hierarchisch über- und untergeordneten Schlüssel-

und Schlossteilen (10, 20), dadurch gekennzeichnet,

dass unterschiedliche Schlüsselteile (10) für die Ermittlung der Resultate (y; y1, y2, ym) zwar zueinander unterschiedliche Algorithmen (G; G1, G2) und/oder für die Bildung der Bruchstücke der Rechen-Resultate unterschiedliche Regeln (H; H1, H2) aufweisen,

aber die Schlossteile (20) jeweils die Algorithmen und/oder Regeln aller zugelassenen Schlüsselteile (10) beinhalten, welche in der Vergleichsphase (K; K1, K2, Km) auf ihre Übereinstimmung mit denjenigen des Schlüsselteils (10) überprüft werden.

**Claims**

1. An electronic locking arrangement having key- and lock-type parts (key part 10, lock part 20) interacting via electric pulses,

wherein the lock part (20) is provided on an element to be locked, such as a door (31), has arresting means (33, 35), can be operated only by a specific associated key part (10), thereby switching over the arresting means (33, 35) between an operative and an inoperative position (34),

wherein, following a start pulse, at least one part (lock part 20) generates random numbers in form of electric pulses in a random number generator (24) and stores the same (23) on the one hand, while on the other hand transmitting the same (30) to the other part (key part 10) via a contact medium,

the pulses obtained on the key and lock sides are applied to a common comparator in the one part (lock part 20), where they are compared,

and the comparator, only in case of compliance of both pulse sequences supplies a switching pulse (38) via a switching member (29) for switching over (34) the arresting means (33, 35), characterized in

that the start pulse originates (A) from the key part (10),

that the random numbers (x; Z1 to Zn; Z1' to Zn') are respectively subjected separately in the key and lock parts (10, 20) to a two-stage encoding which is respectively characteristic of associated key and lock parts (10, 20),

wherein, in the first stage (G; G1, G2) a computer (11, 21) in both parts (10, 20) performs specific arithmetic operations with a given algorithm, whose arithmetic result (y; y1, y2) is dependent on the respective used random numbers (x; x1, x2),

and, in the second stage (H; H1, H2) the computer (11, 21) in both parts (10, 20) withdraws a respective fraction ($\bar{y}$; $\bar{y}1$, $\bar{y}2$) from the arithmetic result (y; y1, y2) according to a specific rule independent of the generated random numbers,

and that only these result fractions ($\bar{y}$; $\bar{y}1$, $\bar{y}2$) are transmitted (30) between the key and lock parts (10, 20) and are supplied (J; J1, J2) to the common comparator (K; K1, K2).

2. A locking arrangement as claimed in the claim 1, characterized in

that, following the start pulse on the key side (A, B) a preliminary program (Cn to En) runs off, in which both in the key part and also in the lock part (10, 20), and independently of each other, respective quantities (Z1-Zn; Z1' to Zn') of independent random numbers are generated (Cn), transmitted to each other (Dn) and on both sides received (En) in respective memories (13, 23),

and then, in a subsequent main program a respective group from these random numbers which complies on the lock and key sides, is withdrawn (F1; F2) from the memories (13, 23) and both are interconnected to operands (x1; x2) according to a same law of formation,

and these operands (x1; x2) serve as a basis of the respective arithmetic operations (G1; G2) in the computers (11, 12).

3. A locking arrangement as claimed in the claim 2, characterized in

that the main program between the key and lock parts (10, 20) includes several analog successive operating cycles (F1 to L1; F2 to L2),

each of which consist of a two-stage determination phase (F1, G1, H1; F2, G2, H2) running off independently on the lock and key sides, for the respective result fractions ($\bar{y}1$; $\bar{y}2$; $\bar{y}m$) and a reference phase (J1, K1; J2, K2) commonly running off in the key and lock parts (10, 20),

the switching pulse (L1, L2) obtained at the end of an operating cycle (F1 to L1) though, in case of compliance of the result fractions to be compared ($\bar{y}1$, $\bar{y}2$, $\bar{y}m$), generally only initiates the formation of a new operand (x2) from another group of the stored random numbers (Z1 to Zn, Z1' to Zn') for the respective next operating cycle (F2–L2),

however, after a specific number of operating cycles, the switch pulse (Lm) obtained in the last operating cycle (Km, Lm) switches over the arresting means (33, 35) on the lock side.

4. A locking arrangement as claimed in the claim 3, characterized in

that the operating cycles (F1 to L1; F2 to L2) run off alternatingly in mirror-inverted manner between the key- and lock parts (10, 20), in that

the reference phase (K1, K2, Km) of the result-fractions ($\bar{y}1$; $\bar{y}2$; $\bar{y}m$) obtained on both sides, in successive operating cycles runs off for one on the key side (10) and for another on the lock side (20),

while in the respective other part (lock resp. key part 20, 10), upon transmission (30) of the result fractions ($\bar{y}1$; $\bar{y}2$; $\bar{y}m$) the new operand (x2; xm) for the next operating cycle is already formed and, independently of the reference result (K1; K2), the new operating cycle begins therein.

5. A locking arrangement as claimed in any one or several of the claims 2 to 4, characterized in

that though each operating cycle (F1 to L1; F2 to L2) is based on the same algorithm always on the key and lock sides, however, the same changes in cycles and in compliance in the key and lock parts (10, 20).

6. A locking arrangement as claimed in any one or several of the claims 1 to 5, characterized in

that in case of lack of compliance of the two result fractions ($\bar{y}1$; $\bar{y}2$; $\bar{y}m$) in the reference phase (K1; K2; Km) the key part and/or lock part (10, 20) is inoperative at least for a definite period of time.

7. A locking arrangement as claimed in any one or several of the claims 1 to 6, characterized in

that the electric pulses between the key and lock parts (10, 20) are transmitted by radiation, e.g. electromagnetic waves (30).

8. A locking arrangement as claimed in any one or several of the claims 1 to 6, characterized in

that the electric pulses between the key and lock parts (10, 20) are transmitted by contact connection.

9. A locking arrangement as claimed in any one or several of the claims 1 to 8, having hierarchically primary and secondary key and lock parts (10, 20), characterized in

that, though all key and lock parts (10, 20) in the first stage (G; G1; G2) of encoding in the determination of the arithmetic results (y; y1; y2) are based on the same algorithm,

however, in secondary key and lock parts (10, 20) in the second stage (H; H1; H2) of encoding smaller fractions ($\overline{y}$; $\overline{y}1$; $\overline{y}2$; $\overline{y}m$) of the arithmetic result are determined and/or transmitted (J; J1; J2) and/or compared with each other (K; K1, K2, Km) than in primary key and lock parts (10, 20).

10. A locking arrangement as claimed in any one or several of the claims 1 to 8, having hierarchically primary and secondary key and lock parts (10, 20), characterized in

that, though different key parts (10) for determination of the results (y; y1; y2, ym) have algorithms (G; G1, G2) differing from each other and/or different rules (H; H1, H2) for the formation of the fractions of the arithmetic results, however, the lock parts (20) include the respective algorithms and/or rules of all approved key parts (10), which in the reference phase (K; K1, K2, Km) are examined as to their compliance with those of the key parts (10).

**Revendications**

1. Dispositif de verrouillage électronique à pièces de type clé et de type serrure (partie-clé 10, partie-serrure 20), entrant réciproquement en action l'une avec l'autre par l'entremise d'impulsions électriques, dispositif dans lequel la partie-serrure (20) est disposée sur un élément à verrouiller, tel qu'une porte (31), comporte des moyens de verrouillage (33, 35), n'est actionnable que par une partie-clé (10) déterminée, qui lui appartient, et inverse (34) ainsi les moyens de verrouillage (33, 35) d'une position active à une position inactive et vice-versa, dispositif dans lequel, à partir d'une impulsion de départ, au moins l'une des pièces (partie-serrure 20) produit arbitrairement, dans un générateur aléatoire (24), des chiffres aléatoires sous forme d'impulsions électriques, et d'une part les mémorise (23) et d'autre part les retransmet (30) à l'autre pièce (partie-clé 10) par l'entremise d'un système de contact, les impulsions produites du côté de la clé et du côté de la serrure sont transmises à un organe de comparaison commun dans l'une des pièces (partie-serrure 20) et y sont comparées, et l'organe de comparaison ne délivre une impulsion de commutation (38) pour l'inversion (34) des moyens de verrouillage (33, 35), par l'entremise d'un organe de commutation (29), que dans le cas de la concordance des deux séries d'impulsions, caractérisé par le fait que l'impulsion de départ émane (A) de la partie-clé (10), par le fait que les chiffres aléatoires (x; Z1 à Zn; Z1′ à Zn′) sont assujettis séparément, dans la partie-clé et dans la partie serrure (10, 20), à une codification à deux stades, codification qui est caractéristique respectivement des parties-serrure et des parties-clé (10, 20) associées entre elles, en notant que, au premier stade (G; G1, G2), un ordinateur (11, 21) effectue, dans les deux pièces (10, 20), des opérations de calcul déterminées avec un algorithme prescrit, opérations dont le résultat (y; y1; y2) dépent des chiffres aléatoires (x; x1, x2) employés chaque fois et, au deuxième stade (H; H1, H2), l'ordinateur (11, 21) enlève respectivement, dans les deux pièces (10, 20), un fragment ($\overline{y}$; $\overline{y}1$, $\overline{y}2$) du résultat du calcul (y; y1, y2) suivant une certaine règle indépendante des chiffres aléatoires engendrés, et par le fait que seuls ces fragments de résultat ($\overline{y}$; $\overline{y}1$, $\overline{y}2$) sont transférés (30) entre la partie-clé et la partie-serrure (10, 20) et sont amenés (J; J1, J2) à l'organe de comparaison commun (K; K1, K2).

2. Dispositif de verrouillage selon la revendication 1, caractérisé par le fait que, après l'impulsion de départ (A, B) du côté de la clé, il se déroule d'abord un avant-programme (Cn à En) dans lequel, tant dans la partie-clé que dans la partie-serrue (10, 20), chacune de son côté, une quantité propre (Z1–Zn; Z1′ à Zn′) de chiffres aléatoires indépendants est engendrée (Cn), retransmise de part et d'autre (Dn) et stockée (En) respectivement dans des mémoires (13, 23) et puis, dans un programme principal qui suit, un groupe provenant de ces chiffres aléatoires et concordant respectivement du côté de la serrure et du côté de la clé, est retiré (F1; F2) des mémoires (13, 23) et rattaché à des grandeurs de calcul (x1; x2) suivant une même loi de formation, et ces grandeurs de calcul (x1; x2) sont prises pour base dans les ordinateurs (11, 21) pour les opérations de calcul respectives (G1; G2).

3. Dispositif de verrouillage selon la revendication 2, caractérisé par le fait que le programme principal englobe plusieurs cycles d'opérations (F1 à L1; F2 à L2) analogiques successifs entre la partie-clé et la partie-serrure (10, 20), cycles qui consistent en une phase de recherche (F1, G1, H1; F2, G2, H2) en deux stades, se déroulant indépendamment respectivement du côté de la serrure et du côté de la clé, pour les fragments de résultat respectifs ($\overline{y}1$; $\overline{y}2$; $\overline{y}m$), et en une phase de comparaison (J1, K1; J2, K2) se déroulant en commun dans la partie-clé et dans la partie-serrure (10, 20), par le fait que l'impulsion de commutation (L1, L2) se produisant à la fin d'un cycle d'opérations (F1 à L1), dans le cas de la concordance des fragments de résultat ($\overline{y}1$, $\overline{y}2$, $\overline{y}m$) à comparer ne déclenche, en règle générale, que la formation d'une nouvelle grandeur de calcul (x2) à partir d'un groupe supplémentaire des chiffres aléatoires mis en mémoire (Z1 à Zn, Z1′ à Zn′), respectivement pour le prochain cycle d'opérations (F2 à L2), mais l'impulsion de commutation (Lm) se produisant, après un certain nombre de cycles d'opérations, dans le dernier cycle d'opérations (Km, Lm), inverse les moyens de verrouillage (33, 35) du côté de la serrure.

4. Dispositif de verrouillage selon la revendication 3, caractérisé par le fait que les cycles d'opérations (F1 à L1; F2 à L2) se déroulent entre la partie-clé et la partie-serrure (10, 20) en alternance, symétriquement l'un par rapport à l'autre, en ce sens que la phase de comparaison (K1, K2, Km) des fragments de résultat ($\bar{y}1$; $\bar{y}2$; $\bar{y}m$), se produisant de part et d'autre, se déroule dans des cycles d'opérations successifs, tantôt du côté de la clé (10), tantôt du côté de la serrure (20), et, à cette occasion, chaque fois dans l'autre partie (partie-serrure ou partie-clé 20, 10), la nouvelle grandeur de calcul (x2; xm) est formée pour le prochain cycle d'opérations déjà pendant la retransmission (30) des fragments de résultat ($\bar{y}1$; $\bar{y}2$; $\bar{y}m$) et là, indépendamment du résultat de la comparaison (K1; K2), le nouveau cycle d'opérations commence.

5. Dispositif de verrouillage selon l'une ou plusieurs des revendications 2 à 4, caractérisé par le fait que, dans chaque cycle d'opérations (F1 à L1; F2 à L2) du côté de la clé et du côté de la serrure, c'est toujours le même algorithme qui est à la base, mais celui-ci se modifie dans la partie-clé et dans la partie-serrure (10, 20) de manière concordante par cycle.

6. Dispositif de verrouillage selon l'une ou plusieurs des revendications 1 à 5, caractérisé par le fait que, en cas d'absence de concordance des deux fragments de résultat ($\bar{y}1$; $\bar{y}2$; $\bar{y}m$), dans la phase de comparaison (K1; K2; Km), la partie-clé et/ou la partie-serrure sont inactives, au moins pendant une certaine durée.

7. Dispositif de verrouillage selon l'une ou plusieurs des revendications 1 à 6, caractérisé par le fait que les impulsions électriques sont transférées entre la partie-clé et la partie-serrure (10, 20) par rayonnement, par exemple par ondes électromagnétiques (30).

8. Dispositif de verrouillage selon l'une ou plusieurs des revendications 1 à 6, caractérisé par le fait que les impulsions électriques sont transférées entre la partie-clé et la partie-serrure (10, 20) par contact physique.

9. Dispositif de verrouillage selon l'une ou plusieurs des revendications 1 à 8, avec des partie-clé et partie-serrure (10, 20) dominées ou dominantes hiérarchiquement les unes par rapport aux autres, caractérisé par le fait que c'est le même algorithme qui est à la base, pour toutes les parties-clé et parties-serrure (10, 20), au premier stade (G; G1, G2) de la codification, lors de la recherche des résultats du calcul (y; y1, y2), mais que, avec des parties-clé et des parties-serrure (10, 20) dominées, au deuxième stade (H; H1, H2) de la codification, sont recherchés et/ou retransmis (J; J1, J2) et/ou comparés (K; K1, K2, Km) les uns aux autres, des fragments ($\bar{y}$; $\bar{y}1$; $\bar{y}2$; $\bar{y}m$) de résultat du calcul plus petits qu'avec des parties-clé et des parties-serrure (10, 20) dominantes.

10. Dispositif de verrouillage selon l'une ou plusieurs des revendications 1 à 8, avec des parties-clé et parties-serrure (10, 20) dominées ou dominantes hiérarchiquement les unes par rapport aux autres, caractérisé par le fait que des parties-clé (10) différentes présentent, pour la recherche des résultats (y; y1, y2, ym), des algorithmes (G; G1, G2) différents les uns des autres et/ou des règles différentes (H; H1, H2) pour la formation des fragments des résultats de calcul, mais que les parties-serrure (20) comprennent respectivement les algorithmes et/ou les règles de toutes les parties-clé (10) autorisées, lesquelles, dans la phase de comparaison (K; K1, K2, Km), sont vérifiées quant à leur concordance avec ceux de la partie-clé (10).

FIG.1

Tabelle I

Vergleichsarbeit zwischen
Schlüssel und Schloß   der Schließeinrichtung

| Arbeitsgänge beim Schlüsselteil 10 | Signalübergänge im Kontaktmedium 30 | Arbeitsgänge beim Schloßteil 20 | Bezeichnung der Arbeitsphase | |
|---|---|---|---|---|
| Start Impuls | | | A | Vorprogramm |
| S — Erregen → | | E Impuls | B | |
| | | Generieren von x | C | |
| E ← Frage: x | | S | x | D | |
| Errechnen von y | | Errechnen von y | G | Hauptprogramm |
| Verschleiern in ȳ | | Verschleiern in ȳ, y | H | |
| S — Antwort: ȳ → | | E ȳ, Speichern ȳ | J | |
| | | Vergleichen von ȳ | K | |
| | | Schalt-impuls, Stop | L | |

Tabelle II

Vergleichsarbeit zwischen Schlüssel und Schloß    der Schließeinrichtung

| Arbeitsgänge beim Schlüsselteil 10 | Signalübergänge [30] im Kontaktmedium | Arbeitsgänge beim Schloßteil 20 | Bezeichnung der Arbeitsphase |
|---|---|---|---|

Start — A

Erregen (S → E) — B

Generieren $z_1 ... z_n$ | Generieren $z_1' ... z_n'$ — $C_n$

Fragen: $z_1 ... z_n$ (S → E) — $D_n$

$z_1 ... z_n$ | Rückfragen: $z_1' ... z_n'$ (E ← S) | $z_1 ... z_n$ | $z_1' ... z_n'$ — $D_n$

Speichern $z_1 ... z_n; z_1' ... z_n'$ | Speichern $z_1' ... z_n'; z_1 ... z_n$ — $E_n$

Bilden von $x_1$ | Bilden von $x_1$ — $F_1$

$x_1$ | $x_1$

Errechnen von $y_1$ | Errechnen von $y_1$ — $G_1$

$y_1$ | $y_1$

Verschleiern in $\bar{y}_1$ | Verschleiern in $\bar{y}_1$ — $H_1$

$\bar{y}_1$ | 1. Antwort: $\bar{y}_1$ (E ← S) | $\bar{y}_1$ — $J_1$

Vergleichen von $\bar{y}_1$ — $K_1$

Stop — $L_1$

Bilden von $x_2$ | Bilden von $x_2$ — $F_2$

$x_2$ | $x_2$

Errechnen von $y_2$ | Errechnen von $y_2$ — $G_2$

$y_2$ | $y_2$

Verschleiern in $\bar{y}_2$ | Verschleiern in $\bar{y}_2$ — $H_2$

$\bar{y}_2$ | 2. Antwort: $\bar{y}_2$ (S → E) | $\bar{y}_2$ | $\bar{y}_2$ — $J_2$

Vergleichen von $\bar{y}_2$ — $K_2$

Stop — $L_2$

etc. nach Programm | m. Antwort: $\bar{y}_m$ (S → E) | nach Programm | $\bar{y}_m$ | $\bar{y}_m$

Vergleichen von $\bar{y}_m$ — $K_m$

Stop / Schalt-impuls — $L_m$

Vorprogramm

Hauptprogramm

1. Arbeitszyklus

2. Arbeitszyklus

m. Arbeitszyklus